# EUROPÄISCHE PATENTSCHRIFT

(11) **EP 0 635 927 B1**
(45) Veröffentlichungstag und Bekanntmachung des Hinweises auf die Patenterteilung: **17.12.1997**
(21) Anmeldenummer: 94110560.3
(22) Anmeldetag: 07.07.1994
(51) Int. Cl.: H02K 23/36

(54) **Permanentmagnet-Gleichstrommotor**
DC motor with permanent magnet
Moteur à courant continu et à aimants permanents

(30) Priorität: 20.07.1993 DE 4324258
(43) Veröffentlichungstag der Anmeldung: 25.01.1995
(73) Patentinhaber: Braun Aktiengesellschaft, Frankfurt am Main (DE)
(72) Erfinder: Bauer, Alfred, D-62363 Neu Isenburg (DE); Ring, Martin, Dr., D-65779 Kelkheim (DE)

(56) Entgegenhaltungen:
- EP-A- 0 277 431
- DE-C- 3 812 190
- US-A- 3 525 912

## Beschreibung

Die Erfindung betrifft einen Permanentmagnet-Gleichstrommotor mit zwei Drehzahlstufen, insbesondere für den Antrieb von Haushaltsküchenmaschinen, mit einem mit Dauermagneten bestückten Stator und einem Rotor, der einerseits zwei Kommutatoren mit jeweils mindestens zwei an einem Kommutator etwa diametral gegenüberliegenden Kommutatorbürsten und andererseits zwei galvanisch voneinander getrennte, mit je einem der Kommutatoren verbundene Ankerwicklungen aufweist, die etwa gleiche Windungszahlen und gleiche Drahtquerschnitte bei gleicher Materialauswahl aufweisen und wobei Schaltmittel zum Anschließen der Kommutatorbürsten an ein Wechselspannungsnetz vorhanden sind.

Ein derartiger Permanentmagnet-Gleichstrommotor ist bereits aus der DE-38 12 190 C1 bekannt. Bei diesem Permanentmagnet-Gleichstrommotor weist der Rotor zwei Ankerwicklungen auf, von denen jede mit einem separaten auf dem Rotor angeordneten Kommutator verbunden ist. Ohne die hier beschriebene zusätzliche dritte Kollektorbürste kann der Permanentmagnet-Gleichstrommotor mit drei verschiedenen Drehzahlen betrieben werden, nämlich einerseits dadurch, daß die beiden Wicklungen separat eingeschaltet werden (zwei Geschwindigkeitsstufen) und andererseits, daß beide Wicklungen hintereinander geschaltet werden (dritte Geschwindigkeitsstufe). Wird dieser Permanentmagnet-Gleichstrommotor mit nur einer Wicklung betrieben, so wird die Leistungsfähigkeit dieses Kommutatormotors nicht vollständig ausgenutzt.

Weiterhin wird von der Anmelderin seit vielen Jahren eine Küchenmaschine vom Typ "Braun Multipractic plus basic, UK 90" vertrieben, wie sie aus der Braun Programmübersicht, Herbst 1989, auf Seite 34, beschrieben ist. Der in dieser Küchenmaschine verwendete Elektromotor besteht aus einem Universalmotor, der mit zwei Drehzahlstufen betreibbar ist. Hierbei wird in den Motor stromkreis eine Diode geschaltet, die bei ihrer Aktivierung eine Halbwelle der Wechselspannung abschneidet, wodurch der Motor eine andere Kennlinie erhält und mit geringerer Geschwindigkeit läuft.

Weiterhin gibt es mit Wechselspannung betriebene Gleichstrommotoren, wie sie in der von der Anmelderin ebenfalls seit vielen Jahren vertriebenen Küchenmaschine "Braun Multipractic plus electronic de luxe, UK 400" verwendet werden. Bei dieser Küchenmaschine ist die Drehzahl des Gleichstrommotors stufenlos regelbar, was einen aufwendigen elektronischen Drehzahlsteller erforderlich macht.

Weiterhin ist es bei einem Permanentmagnet-Gleichstrommotor bekannt, daß bei einer bestimmten Spannung unabhängig von der Windungszahl der wirksame Wickeldrahtquerschnitt für die Größe des entmagnetisierenden Feldes maßgebend ist. Wenn also bei einem Permanentmagnet-Gleichstrommotor die Wicklungen im Drahtquerschnitt so dimensioniert sind, daß gerade Entmagnetisierung vermieden wird, so wird bei einer Parallelschaltung der beiden Teilwicklungen eine gründliche Entmagnetisierung eintreten, da das maximale Ankerquerfeld um den Faktor 2 etwa überschritten wird. Andererseits wird bei Einschaltung nur einer Teilwicklung für die hohe Drehzahlstufe diese Teilwicklung zu schnell erwärmt, weil die andere Teilwicklung nicht mitbenutzt wird.

Aufgabe der Erfindung ist es, einen Permanentmagnet-Gleichstrommotor zu schaffen, der mit einfachen Schaltmitteln mit zwei Geschwindigkeiten betreibbar ist, der entmagnetisierungsfest ist und bei dem in beiden Drehzahlstufen die vorhandenen Wicklungen gut ausgenutzt werden.

Diese Aufgabe wird gemäß dem kennzeichnenden Teil des Patentanspruchs 1 gelöst. Anhand der Erfindung wird also ein Permanentmagnet-Gleichstrommotor geschaffen, der entmagnetisierungsfest ist und dessen Wicklungen gleichmäßig beaufschlagt werden, weil die beiden Teilwicklungen abwechselnd im Rhythmus der Netzfrequenz ein- und ausgeschaltet werden. Demnach wird also beispielsweise bei einer 50 Hertz-Netzfrequenz alle 10 Millisekunden die Teilwicklung gewechselt. Damit wird die gesamte Ankerverlustleistung auf die beiden Teilwicklungen aufgeteilt, so daß die Erwärmung des Permanentmagnet-Gleichstrommotors langsamer erfolgt, was letztendlich zu einer längeren Einschaltzeit bei gleicher Belastung des Elektromotors führt.

Aufgrund der erfindungsgemäßen Schaltung ist nur ein einfacher Schalter erforderlich, durch den die beiden Drehzahlstufen eingeschaltet werden können. Hierdurch werden die Herstellkosten für eine Drehzahlumschaltung an einem Permanentmagnet-Gleichstrommotor erheblich reduziert.

Gemäß den Merkmalen des Patentanspruchs 2 wird eine optimale Funktion des Elektromotors erreicht, da beide Ankerwicklungen gleich dimensioniert sind.

Durch die Weiterbildung nach den Merkmalen des Patentanspruchs 3 ergibt sich der Vorteil, daß der Motor seine jeweils maximale Leistungsfähigkeit in den beiden Drehzahlstufen erreicht, weil der Wickeldrahtquerschnitt so groß gewählt werden kann, daß in beiden Drehzahlstufen gerade keine Entmagnetisierung beim Einschalten und/oder beim Blockieren stattfindet. Würde man den Wickeldrahtquerschnitt für den Fall der Parallelschaltung beider Ankerwicklungen in der hohen Drehzahl stufe dimensionieren, hätte dieser in der niedrigen Drehzahl stufe (Reihenschaltung) einen Wert, der nur die Hälfte des möglichen Wertes beträgt. Damit wäre der Motor in der unteren Drehzahl stufe unnötig schwach. Wählt man aber den doppelten Wert für den Wickeldrahtquerschnitt, dann darf in der schnellen Drehzahlstufe nur eine Teilwicklung eingeschaltet werden, was zu einer erhöhten Erwärmung in dieser Stufe führen würde.

Ein Ausführungsbeispiel der Erfindung ist in der Zeichnung dargestellt und wird im folgenden näher erläutert. Es zeigen:
- Fig. 1: ein Schaltbild des erfindungsgemäßen Permanentmagnet-Gleichstrommotors, bei dem der Schalter in seiner Offenstellung steht, also die langsam laufende Drehzahlstufe des Motors anzeigt,
- Fig. 2: Stromlaufplan bei der eingestellten langsamen Drehzahlstufe, also dem geöffneten Schalter nach Fig. 1 und
- Fig. 3: Stromlaufplan bei etwa doppelt so schnell laufender Drehzahl stufe, wobei dann nach Fig. 1 der Schalter geschlossen wäre.

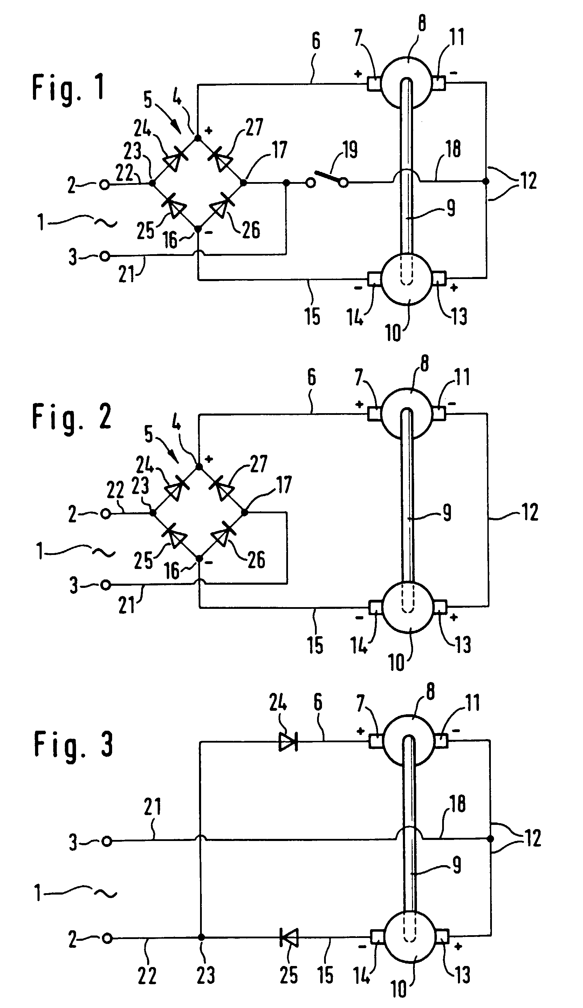

Nach Fig. 1 besteht das Schaltbild aus einer Wechselspannungsquelle 1 mit zwei Netzspannungsanschlüssen 2 und 3. Der Plus-Ausgang 4 des Brückengleichrichters 5 ist über die Leitung 6 mit der Kommutatorbürste 7 verbunden, die schleifend an der Oberfläche eines ersten Kommutators 8 anliegt. Der Kommutator 8 ist Bestandteil eines Rotors 9, der an seinem anderen Ende einen zweiten Kommutator 10 trägt. Diametral gegenüberliegend zur Kommutatorbürste 7 liegt am ersten Kommutator 8 eine zweite Kommutatorbürste 11 an, die über eine Verbindungsleitung 12 mit einer dritten Kommutatorbürste 13 verbunden ist, die schleifend an der Oberfläche des zweiten Kommutators anliegt. Diametral gegenüberliegend zur dritten Kommutatorbürste liegt an der Oberfläche des zweiten Kommutators 10 eine vierte Kommutatorbürste 14 an, die über eine zweite Leitung 15 mit dem Minus-Ausgang 16 des Brückengleichrichters 5 verbunden ist.

Der Wechselspannungseingang 17 des Brückengleichrichters 5 ist über eine Anschlußleitung 18 mit der Verbindungsleitung 12 dann verbunden, wenn der in der Anschlußleitung 18 zwischengeschaltete Schalter 19 geschlossen ist, was allerdings in der Zeichnung gemäß Fig. 1 nicht dargestellt ist. Der Wechselspannungseingang 17 ist über eine weitere Leitung 21 mit dem Netzspannungsanschluß 3 verbunden. Die Verbindung vom Netzspannungsanschluß 2 zum Brückengleichrichter 5 wird durch die Leitung 22 dargestellt, die am Brückengleichrichter 5 am Wechselspannungseingang 23 angeschlossen ist.

Der Brückengleichrichter 5 besteht nach Fig. 1 aus zwei Eingängen 23, 17 und zwei Ausgängen 4, 16. Zwischen dem Eingang 23 und dem Ausgang 4 ist eine zum Ausgang 4 gerichtete Gleichrichterdiode 24 angeordnet. Zwischen dem Eingang 23 und dem Ausgang 16 ist eine zum Eingang 23 gerichtete Gleichrichterdiode 25 angeordnet. Zwischen dem Eingang 17 und dem Ausgang 16 befindet sich eine zum Eingang 17 gerichtete Gleichrichterdiode 26. Zwischen dem Eingang 17 und dem Ausgang 4 befindet sich eine zum Ausgang 4 gerichtete Gleichrichterdiode 27.

In Fig. 2 ist das Schaltbild dargestellt, das sich ergibt, wenn der Schalter 19 gemäß Fig. 1 seine Offenstellung einnimmt, d.h., es ergibt sich dann ein Schaltbild, als wenn der Schalter 19 und die Anschlußleitung 18 gemäß Fig. 1 nicht vorhanden wären. Entsprechendes gilt für das Schaltbild gemäß Fig. 3, wo der Schalter 19 gemäß Fig. 1 geschlossen ist und daher im Schaltbild nicht dargestellt wird. Die Anschlußleitung 18 ist daher in Fig. 3 so dargestellt, als wenn sie eine direkte Verbindung über die Anschlußleitung 21 zum Netzspannungsanschluß 3 hat und somit die in Fig. 1 dargestellten Gleichrichterdioden 26, 27 keine Wirkung entfalten und daher auch in Fig. 3 nicht dargestellt sind. Lediglich die beiden Dioden 24, 25 treten dabei in Funktion und sind über den Wechselspannungseingang 23 miteinander verbunden, wobei die Gleichrichterdiode 24 die Verbindung vom Wechselspannungseingang 23 über die Leitung 6 zur Kommutatorbürste 7 und die Gleichrichterdiode 25 die Verbindung von der vierten Kommutatorbürste 14 über die Leitung 15 zum Wechselspannungseingang 23 herstellt.

Die Wirkungsweise des erfindungsgemäßen Permanentmagnet-Gleichstrommotors gemäß den Schaltbildern nach den Figuren 2 und 3 ist folgende:

Wurde nach Fig. 1 die langsam laufende Drehzahl stufe des Elektromotors gewählt, so muß der Schalter 19 geöffnet sein, so daß sich das in Fig. 2 vereinfachte Schaltbild ergibt. Beim Anschluß an das Wechselspannungsnetz an den Netzspannungsanschlüssen 2, 3 fließt der durch den Brückengleichrichter 5 gleichgerichtete Strom über die beiden in Reihe geschalteten Ankerwicklungen. Die Ankerwicklungen sind in den Figuren 1 bis 3 nicht dargestellt, da die erste Ankerwicklung mit dem ersten Kommutator 8 und die zweite Ankerwicklung mit dem zweiten Kommutator 10 verbunden ist. Dadurch, daß der Strom durch beide Teilankerwicklungen fließt, ergibt sich die langsame Drehzahlstufe am Motor. Beide Teilankerwicklungen des Elektromotors werden gleichzeitig und auch gleichmäßig belastet.

Wird nach Fig. 1 die schneller laufende Drehzahlstufe des Elektromotors gewählt, so muß der Schalter 19 geschlossen sein, so daß sich das in Fig. 3 vereinfachte Schaltbild ergibt. Bei Anlegen einer Wechselspannungsquelle an die Netzspannungsanschlüsse 2, 3 fließt abwechselnd Strom über die beiden Kommutatoren 8, 10 zu den Teilankerwicklungen. Während der positiven Halbwelle der Netzspannung fließt der Strom nur über die Gleichrichterdiode 24 zur ersten Teilankerwicklung, die dem ersten Kommutator 8 zugeordnet ist. Während der negativen Halbwelle der Netzspannung kann der Strom nur über die Leitung 21, 18, 12, den zweiten Kommutator 10 und die Gleichrichterdiode 25 zum Netzspannungsanschluß 2 fließen. Dabei ist während der positiven Netzspannungshälfte am Netzspannungsanschluß 3 die positive Polarität und am Netzspannungsanschluß 2 die negtive Polarität. Durch die alternierende Beaufschlagung der beiden Teilwicklungen werden diese gleichmäßig ausgenutzt und somit auch gleichmäßig erwärmt.

## Patentansprüche

1. Permanentmagnet-Gleichstrommotor mit zwei Drehzahlstufen, insbesondere für den Antrieb von Haushaltsküchenmaschinen, mit einem mit Dauermagneten bestückten Stator und einem Rotor (9), der einerseits zwei Kommutatoren (8, 10) mit jeweils mindestens zwei an einem Kommutator (8 bzw. 10) etwa diametral gegenüberliegenden Kommutatorbürsten (7, 11 bzw. 13, 14) und andererseits zwei galvanisch voneinander getrennte, mit je einem der Kommutatoren (8, 10) verbundene Ankerwicklungen aufweist, die etwa gleiche Windungszahlen und gleiche Drahtquerschnitte bei gleicher Materialauswahl aufweisen und wobei Schaltmittel zum Anschließen der Kommutatorbürsten (7, 11 bzw. 13, 14) an ein Wechselspannungsnetz (1) vorhanden sind,
**dadurch gekennzeichnet**,
daß die Schaltmittel aus einem Brückengleichrichter (5) und einem Schalter (19) bestehen, daß die beiden Ankerwicklungen über die Kommutatorbürsten (7, 11 und 13, 14) elektrisch in Reihe miteinander und mit dem Plus- (4) und dem Minus-Ausgang (16) des Brückengleichrichters (5) verbunden sind und daß der Schalter (19) zwischen der die beiden Kommutatorbürsten (11, 13) verbindenden Verbindungsleitung (12) und einem der beiden Wechselspannungsanschlüsse (17, 23) des Brückengleichrichters (5) geschaltet ist.

2. Permanentmagnet-Gleichstrommotor nach Anspruch 1,
**dadurch gekennzeichnet**,
daß die beiden Ankerwicklungen gleiche Windungszahlen und Drahtquerschnitte bei gleicher Materialauswahl aufweisen.

3. Permanentmagnet-Gleichstrommotor nach Anspruch 1,
**dadurch gekennzeichnet**,
daß der Drahtquerschnitt so groß gewählt werden kann, damit in der langsamen Drehzahlstufe (Reihenschaltung beider Ankerwicklungen) gerade keine Entmagnetisierung an den Permanentmagneten beim Einschalten und/oder Blockieren des Motors auftritt.

## Claims

1. A permanent-magnet direct-current motor having two speeds, in particular for driving kitchen apparatus for domestic use, with a stator equipped with permanent magnets and a rotor (9) including on the one side two commutators (8, 10) each with at least two commutator brushes (7, 11 and 13, 14, respectively) in approximately diametrically opposite arrangement on a commutator (8 or 10), and on the other side two electrically isolated armature windings which are connected to a respective one of the commutators (8, 10) and have approximately the same number of turns per unit length and the same wire cross-sections with identical material selection, and with switching means being provided for connecting the commutator brushes 7, 11 and 13, 14, respectively) to an a.c. supply (1),
**characterized in that** the switching means are comprised of a bridge rectifier arrangement (5) and a switch (19), that the two armature windings are electrically connected in series via the commutator brushes (7, 11 and 13, 14) and are connected to the positive output (4) and the negative output (16) of the bridge rectifier arrangement (5), and that the switch (19) is inserted between the connecting line (12) connecting the two commutator brushes (11, 13) and one of the two a.c. terminals (17, 23) of the bridge rectifier arrangement (5).

2. The permanent-magnet direct-current motor as claimed in claim 1,
**characterized in that** the two armature windings have the same number of turns per unit length and the same wire cross-sections with identical material selection.

3. The permanent-magnet direct-current motor as claimed in claim 1,
**characterized in that** the wire cross-section can be selected so large that at the slow speed (both armature windings connected in series) no demagnetization occurs on the permanent magnets when the motor is switched on and/or stalled.

## Revendications

1. Moteur à courant continu et à aimants permanents, à deux échelons de vitesse de rotation, en particulier pour l'entraînement d'appareils ménagers, comportant un stator équipé d'aimants permanents et un rotor (9) qui présente d'une part deux collecteurs (8, 10) avec chacun au moins deux balais (7, 11 ou 13, 14) de collecteur situés sur un collecteur (8 ou 10), à peu près diamétralemet opposés, et d'autre part deux enroulements d'induit qui sont séparés galvaniquement l'un de l'autre, sont chacun reliés à l'un des collecteurs (8, 10) et présentent des nombres de spires à peu près égaux et des sections de fil conducteur égales pour un même choix du matériau, et dans lequel existent des moyens de commutation pour relier les balais (7, 11 ou 13, 14) des collecteurs à un réseau de tension alternative (1),
caractérisé
par le fait que les moyens de commutation sont constitués d'un redresseur en pont (5) et d'un interrupteur (19), que les deux bobinages d'induit sont électriquement reliés en série l'un à l'autre par l'intermédiaire des balais (7, 11 ou 13, 14) de collecteur et sont reliés à la sortie plus (4) et à la sortie moins (16) du redresseur en pont (5) et que l'interrupteur (19) est monté entre la ligne de liaison (12) reliant les deux balais (11, 13) de collecteur et l'une des deux bornes de tension alternative (17, 23) du redresseur en pont (5).

2. Moteur à courant continu et à aimants permanents selon la revendication 1,
caractérisé
par le fait que les deux bobinages d'induit présentent des nombres de spires identiques et des sections de fil conducteur identiques pour un même choix de matériau.

3. Moteur à courant continu et à aimants permanents selon la revendication 1,
caractérisé
par le fait que l'on peut choisir la section du fil conducteur suffisamment grande pour que, dans l'échelon de la petite vitesse de rotation (montage en série des deux bobinages d'induit), absolument aucune démagnétisation ne se produise aux aimants permanents lors de la mise en circuit et/ou du calage du moteur.
